# EUROPÄISCHE PATENTANMELDUNG

(11) **EP 0 542 315 A1**
(43) Veröffentlichungstag der Anmeldung: **19.05.1993**
(21) Anmeldenummer: 92119506.1
(22) Anmeldetag: 14.11.1992
(51) Int. Cl.: F16L 59/153, F24D 3/12

(54) **Rohr für den Transport von Heiz- oder Kühlmedien**

(30) Priorität: 15.11.1991 DE 9114251 U; 15.11.1991 DE 9114252 U
(71) Anmelder: Hewing GmbH, D-48607 Ochtrup (DE)
(72) Erfinder: Höffker, Bruno, W-4440 Rheine 11 (Mesum) (DE)
(74) Vertreter: Busse & Busse Patentanwälte

(57) **Zusammenfassung**

Die Erfindung bezieht sich auf ein Rohr, insbesondere für den Transport von Heiz- oder Kühlmedien, das vorzugsweise in den Boden-, Wand- und/oder Deckenbereich als Bestandteil von Klimatisierungseinrichtungen einbringbar ist. Dabei ist das Rohr als Wellrohr (1;102) aus vernetztem Polyethylen (VPE) ausgebildet.

## Beschreibung

Die Erfindung betrifft ein Rohr für den Transport von Heiz- oder Kühlmedien, nach dem Oberbegriff des Anspruchs 1.

Aus Kunststoff bestehende Rohre werden in glattwandiger Ausführung als Brauchwasserleitungen eingesetzt. In gewellter Ausführung finden sie als Schutz- und Ausgleichsglieder in Rohrdurchführungen bei Fußbodenheizungen Anwendung. Verbundrohre, die zylindrische Rohrschichtungen aufweisen, sind besonders diffusionsfest.

Der Erfindung liegt die Aufgabe zugrunde, ein Rohr für den Transport von Heiz- oder Kühlmedien zu schaffen, das einfach herstellbar, leicht und beliebig verlegbar und dabei diffusionsfest ist.

Die Erfindung löst diese Aufgabe durch ein Kunststoffrohr gemäß Anspruch 1. Hinsichtlich weiterer Ausgestaltungen wird auf die Ansprüche 2 bis 10 verwiesen.

Die Erfindung schafft auf besonders einfache und effektive Weise ein Rohr für Heizungs- und Kühlanlagen, das als Einzelrohr einsetzbar, z.B. in Fußbodenheizungen verwendbar ist, und Rohrkombinationen oder Verbundrohre entbehrlich machen kann. Das Rohr nach der Erfindung ist überaus dicht, dauerfest und sehr flexibel, so daß eine einfache Verlegung auch in engen Biegeradien möglich ist. Dies vermindert den Installationsaufwand wesentlich. Die Stabilität des Wellrohrs ermöglicht vergleichsweise geringe Rohrwanddicken, da homogen extrudierte und vernetzte Materialien wie insbesondere Polyethylen die Anforderungen an Druckfestigkeit und Langzeitbeständigkeit auch bei dünnwandigen Rohrausführungen erfüllen.

Bei einem Einsatz des Wellrohrs innerhalb eines Verbundrohres könnnen die umhüllenden Rohrschichten nach Art eines hülsenförmigen Biegedornes abgestützt und damit unerwünschte Deformationen des Rohrquerschnittes beim bogenförmigen Verlegen des Verbundrohres vermieden werden. Mit der Ausbildung des Kernrohrs als Wellrohr ist das Verbundrohr zudem insgesamt flexibler, so daß Biegeradien bis herab zu 1,5 x d ohne Biegeschablone und ohne Erzeugung übermäßiger Spannungen möglich sind. Dies senkt den Installationsaufwand erheblich.

Weitere Einzelheiten der Erfindung ergeben sich aus der nachfolgenden Beschreibung und der Zeichnung, die ein Ausführungsbeispiel des Rohrs erfindungsgemäßer Ausbildung schematisch veranschaulicht. In der Zeichnung zeigen:
- Fig. 1: eine perspektivische, teilweise geschnittene Darstellung einer Rohrverlegung,
- Fig. 2: eine teilweise geschnittene Darstellung eines Verbundrohres mit innenliegendem Wellrohr,
- Fig. 3: einen vergrößerten Teilausschnitt des Verbundrohres mit vollflächig auf der Aluminiumschicht angebrachtem Haftvermittler,
- Fig. 4: eine Darstellung ähnlich Fig. 3 mit auf dem Wellrohr aufgebrachten Haftvermittler,
- Fig. 5: eine Darstellung ähnlich Fig. 3 mit ausgefüllten Hohlräumen, und
- Fig. 6: eine Darstellung ähnlich Fig. 5 mit sinusförmig profiliertem Wellrohr.

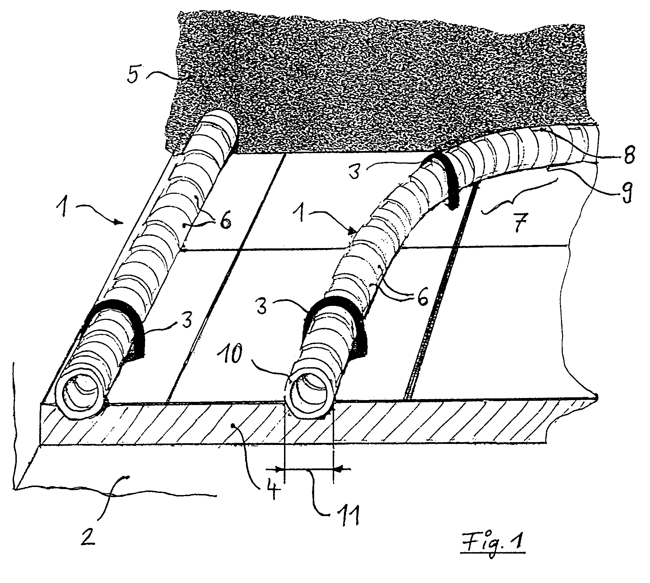

Die Fig. 1 zeigt in einer perspektivischen, teilweise geschnittenen Darstellung zwei Teilabschnitte eines als Wellrobr 1 ausgebildeten Kunststoffrohrs, das im Bereich eines Fußbodens 2 verlegt und mit Halterungen 3 auf einer Dämmschicht 4 fixiert ist. Das aus vernetztem Polyethylen (VPE) bestehende Wellrohr 1 ist teilweise mit einer Estrichschicht 5 bedeckt, die in die Wellungen 6 der Außenfläche des Wellrohres 1 eingeformt ist. Damit ist, im Vergleich mit einem glattwandigen Kunststoffrohr, die für den Wärmeübergang nutzbare Kontaktfläche zwischen Wellrohr 1 und der Estrichschicht 5 vergrößert und gleichzeitig die Lagefixierung des Wellrohres 1 verbessert.

Das vorzugsweise aus elektronenstrahlvernetztem Polyethylen (VPEc) bestehende Wellrohr 1 kann in Bögen 7 mit geringen Biegeradien problemlos verlegt werden, da bei guter Flexibilität des Wellrohres 1 die Festigkeitseigenschaften des vernetzten Kunststoffes sowohl größere Zugbelastungen im Außenbereich 8 als auch erhöhte Druckbelastungen (Stauchungen) im Innenbereich 9 ermöglichen.

Die Wellung 6 des als Heiz- oder Kühlrohr zu verlegenden Wellrohrs 1 hat vorzugsweise eine rechteckige Kontur, kann jedoch auch andere gleichmäßige geometrische Konturen aufweisen (nicht dargestellt), z.B. trapez- oder sinusförmige Konturen. Solche Konturen erbringen eine relativ große Auflagefläche, verbessern das Strömungsverhalten der strömenden Medien und die Bildung von engen Bögen 7. Damit können unterschiedlichsten Anforderungen bei veränderten Rohrquerschnitten, Wanddicken 10 und Rohrdurchmessern 11 Rechnung getragen werden.

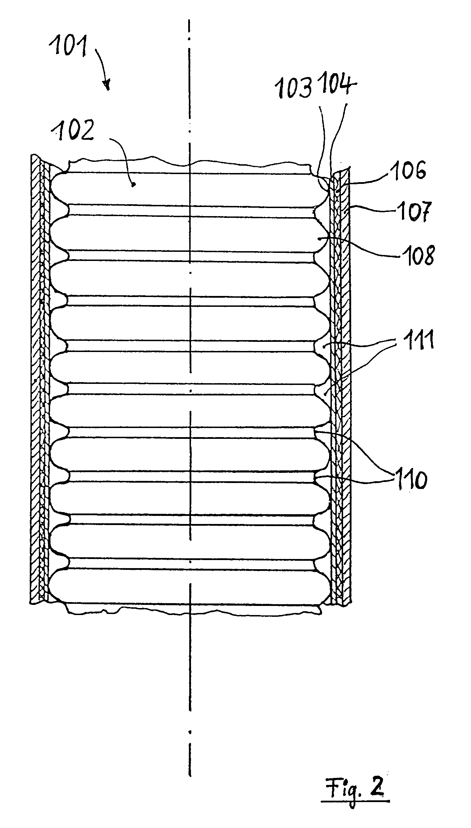

In Fig. 2 ist die erfindungsgemäße Kombination eines Verbundrohres 101 dargestellt, das ein inneres Kernrohr in Form eines Wellrohres 102 aufweist. Diesem Wellrohr 102 ist, in radialer Richtung zumindest bereichsweise linienförmige Kontaktbereiche 103 aufweisend, von einer mittleren Aluminiumschicht 104 umgeben, die an ihrer Außenseite vollflächig mit einem Haftvermittler 106 versehen ist, der die Verbindung zu einem äußeren Hüllrohr 107 herstellt. In zweckmäßiger Ausbildung sind sowohl das Wellrohr 102 als auch das Hüllrohr 107 aus vernetztem Polyethylen gebildet.

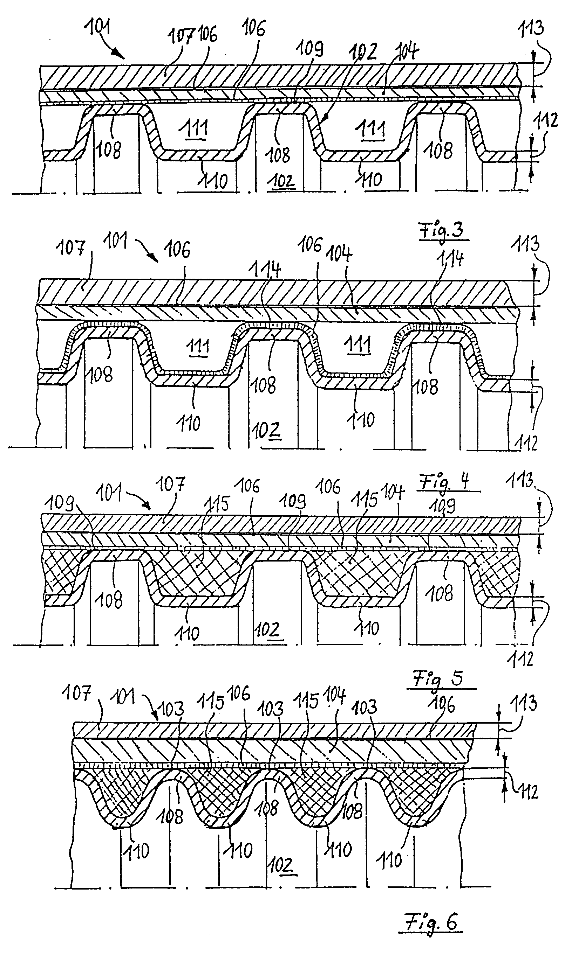

In Fig. 3 ist eine Ausführungsform des Verbundrohres 101 dargestellt, bei der im Gegensatz zur Ausführung nach Fig. 2 auch ein Haftvermittler 106 zwischen Wellrohr 102 und Aluminiumschicht 104 vorgesehen ist, der auf die Innenseite der Aluminiumschicht 104 aufgebracht ist. Dabei können Wellenberge 108 des Wellrohres 102 unter Vorspannung und mit flächigen Kontaktbereichen 109 vermittels dem Haftvermittler 106 an der Aluminiumschicht 104 anliegen und mit Wellentälern 110 Hohlräume 111 zwischen dem Wellrohr 102 und der inneren Aluminiumschicht 104 bilden.

Das Wellrohr 102 ist dabei mit einer Wanddicke 112 ausgebildet, die vorzugsweise die Wanddicke 111 des Hüllrohres 107 unterschreitet, so daß eine gezielte Deformation des Verbundrohres 101 beim Biegen von Bogenbereichen (nicht dargestellt) ohne Spannungsrisse bis herab auf Biegeradien von 1,5 x d möglich ist. Außerdem sind die Wanddicken 112,113 an unterschiedliche Drücke im Verbundrohr 101 anpaßbar.

In Fig. 4 ist in einer variierten Ausführungsform der Haftvermittler auf dem Wellrohr 102 angebracht. In Fig. 4 wie in Fig. 3 und 5 haben die einzelnen Wellenberge 108 trapezförmige Kontur, die allerdings auch rechteckig sein kann, um unterschiedlichen Anforderungen an die Biegefähigkeit des Verbundrohres 101 beim Verlegen in Bogenbereichen Rechnung zu tragen.

In Fig. 5 ist das Verbundrohr 101 in ähnlicher Ausbildung wie in Fig. 3 dahingehend variiert, daß die Hohlräume 111 mit einem Füllstoff 115 ausgefüllt sind. Dazu ist zweckmäßig ein Elastomer in Form eines Polyurethanschaums für den Fall vorgesehen, daß das Verbundrohr 101 thermisch isolierende Eigenschaften aufweisen soll. Eine verbesserte thermische Leitfähigkeit des Verbundrohres 101 ist dann erreichbar, wenn die Hohlräume 111 mit einem gut wärmeleitende Bestandteile, z.B. Aluminiumpulver, enthaltenden Füllstoff 115 versehen sind.

In Fig. 6 ist mit dem eine sinusförmige Kontur aufweisenden Wellrohr 102 eine Möglichkeit angedeutet, das Verbundrohr 101 an verschiedene Anwendungsfälle durch unterschiedliche Stabilitäten des inneren Wellrohres 102 anzupassen.

## Patentansprüche

1. Rohr, insbesondere für den Transport von Heiz- oder Kühlmedien, das vorzugsweise in den Boden-, Wand- und/oder Deckenbereich als Bestandteil von Klimatisierungseinrichtungen einbringbar ist, **dadurch gekennzeichnet,** daß es als Wellrohr (1;102) aus vernetztem Polyethylen (VPE) ausgebildet ist.

2. Rohr nach Anspruch 1, dadurch gekennzeichnet, daß das Wellrohr (1;102) aus elektronenstrahlvernetztem Polyethylen (VPEc) besteht.

3. Rohr nach Anspruch 1 oder 2, dadurch gekennzeichnet, daß das Wellrohr (1;102) eine rechteckige oder trapezförmige Wellung (6;108,110) aufweist.

4. Rohr nach Anspruch 1, dadurch gekennzeichnet, daß es das Kernrohr eines Verbundrohres (101) bildet, das ein inneres Kernrohr, eine mittlere Aluminiumschicht (104) sowie ein äußeres Hüllrohr (107) aufweist, dessen Einzelschichten über Haftvermittler (106) miteinander verbunden sind.

5. Rohr nach Anspruch 4, dadurch gekennzeichnet, daß das Hüllrohr (107) aus vernetztem Polyethylen besteht.

6. Rohr nach Anspruch 4 oder 5, dadurch gekennzeichnet, daß die Wanddicke (112) des Wellrohres (102) geringer ist als die Wanddicke (113) des Hüllrohres (107).

7. Rohr nach einem der Ansprüche 4 bis 6, dadurch gekennzeichnet, daß der Haftvermittler (105) zwischen Wellrohr (102) und Hüllrohr (107) auf der Innenseite des Hüllrohrs (107) als Schicht aufgebracht ist.

8. Rohr nach einem der Ansprüche 4 bis 7, dadurch gekennzeichnet, daß die Aluminiumschicht (104) auf ihrer Außenseite (105) vollflächig oder begrenzt auf den Kontaktbereich (103;109;114) mit dem Hüllrohr (107) mit Haftvermittler beschichtet ist.

9. Rohr nach einem der Ansprüche 4 bis 8, dadurch gekennzeichnet, daß die zwischen Wellrohr (102) und Hüllrohr (107) gebildeten Hohlräume (111) zumindest bereichsweise ausgefüllt sind.

10. Rohr nach Anspruch 9, dadurch gekennzeichnet, daß die Hohlräume (111) ein Elastomer enthalten.
